# FASCICULE DE BREVET EUROPEEN

(11) **EP 1 472 532 B1**
(45) Date de publication et mention de la délivrance du brevet: **24.08.2005**
(21) Numéro de dépôt: 03709866.2
(22) Date de dépôt: 10.01.2003
(51) Int. Cl.: G01N 29/24

(54) **PROCEDE ET DISPOSITIF DE CONTROLE ULTRASONORE DE TUBES**
VERFAHREN UND VORRICHTUNG ZUR ÜBERPRÜFUNG VON RÖHRCHEN MIT ULTRASCHALL
METHOD AND DEVICE FOR CHECKING TUBES USING ULTRASOUND

(30) Priorité: 28.01.2002 FR 0200985
(43) Date de publication de la demande: 03.11.2004
(73) Titulaire: Technip France, 92400 Courbevoie (FR)
(72) Inventeur: LEMBEYE, Philippe, F-76380 Montigny (FR); NICOLAS, Yann, F-76380 Canteleu (FR)
(74) Mandataire: Bertrand, Didier
(86) Numéro de dépôt international: PCT/FR2003/000067
(87) Numéro de publication internationale: WO 2003/065029

(56) Documents cités:
- EP-A- 0 624 794
- DE-A- 4 222 419
- US-A- 5 608 690
- US-A- 6 005 827
- US-B1- 6 226 228

## Description

La présente invention concerne le contrôle de gaines tubulaires en matière plastique extrudée, notamment de celles qui sont utilisées dans les conduites flexibles destinées à véhiculer sur de grandes distances un fluide sous pression et le cas échéant sous haute température, tel qu'un gaz, du pétrole, de l'eau ou d'autres fluides.

Il s'agit notamment de détecter des défauts d'extrusion tels que les bulles d'air et les inclusions dans les gaines et les tubes extrudés en matériau polymère, par exemple le PVDF (polyfluorure de vinylidène). Les gaines considérées dans l'invention ont généralement un diamètre de 60 à 550 mm et une épaisseur de 4 mm à 15 mm. Les défauts à détecter ont généralement un diamètre de l'ordre de 2 mm.

Pour procéder à ces contrôles, on connaît plusieurs solutions.

On peut procéder à un contrôle visuel de la gaine mais cela n'est possible que si la gaine est en matière translucide. Toutefois, cette solution ne se prête pas à l'automatisation.

On peut procéder à une radiographie par rayons X, notamment par tirs croisés à 90°. Mais, lorsque la gaine est disposée sur un feuillard métallique (dans le cas des conduites pétrolières dites "rough bore"), l'atténuation très supérieure des métaux par rapport aux polymères pour les rayons X conduit à effectuer des tirs tangentiels dans l'épaisseur de la gaine, à l'aide d'une tête tournante, ce qui complique la mise en oeuvre du procédé de contrôle et allonge les temps de contrôle.

On peut songer à utiliser le principe de l'échographie ultrasonore, qui permet de s'affranchir du problème de la carcasse métallique.

Le principe de l'échographie ultrasonore est bien connu en imagerie médicale, par exemple par les documents US 6 226 228 ou US 5 608 690, mais les prescriptions données dans ces documents, fondées sur une observation des propriétés du corps humain, sont sans portée pour l'homme du métier confronté au problème spécifique de la présente invention, à savoir le contrôle des gaines en plastique extrudé des conduites. Du reste, de nombreux obstacles font que cette méthode n'a jamais, à la connaissance de la Demanderesse, été retenue en pratique dans le domaine des conduites. En effet :
- certains des plastiques communément utilisés pour les gaines, comme le PVDF, atténuent fortement les ondes ultrasonores, ce qui rend difficile la détection des défauts profonds. Dans ce type de matériaux, l'atténuation, exprimée en dB/mm, est proportionnelle à la fréquence de l'onde ultrasonore. Plus la fréquence augmente, plus l'atténuation augmente. Dans le PVDF, l'atténuation à la fréquence de 2MHz est de l'ordre de 2dB/mm, ce qui est important. A titre comparatif, à la même fréquence, l'atténuation dans l'aluminium avoisine 0,03 dB/mm. Donc, cette atténuation peut être réduite si on privilégie des fréquences ultrasonores faibles, mais au risque d'augmenter l'obstacle suivant, comme on va le voir.
- la taille très faible des défauts à détecter entraîne un problème de sensibilité, qu'on peut chercher à améliorer en choisissant des fréquences ultrasonores élevées, c'est-à-dire en contradiction avec la parade à l'obstacle précédent.
- il est souhaitable d'avoir une méthode de contrôle unique qui couvre l'ensemble des applications souhaitées, or celles-ci varient beaucoup en termes d'épaisseur de gaine, de diamètre de tube (avec notamment des effets de défocalisation pour les plus petits diamètres) et de nature du matériau constitutif.

Sur la base de ses connaissances usuelles, notamment telles qu'elles résultent des normes fixées pour les traducteurs ultrasonores (cf. notamment les normes françaises A09-323, A09-325 et A09-330), il apparaît à l'homme du métier qu'il est nécessaire de prévoir plusieurs traducteurs différents pour couvrir avec une bonne sensibilité la totalité de la gaine dans toutes ses applications, à savoir au moins un type de traducteur pour détecter les défauts à la surface de la gaine ou pour les gaines de faible épaisseur et au moins un autre type de traducteur pour le fond de la gaine.

Le but de l'invention est de proposer un procédé et un dispositif de contrôle par ultrasons qui soient polyvalents, en dépit des obstacles signalés et des préjugés de l'Homme du métier.

L'invention atteint son but en proposant un procédé de contrôle d'une gaine en matière plastique extrudée, caractérisé en ce qu'il s'agit d'un procédé échographique ultrasonore par immersion et en ce que la fréquence centrale des ultrasons est choisie entre 1,5 MHz et 3 MHz, avantageusement entre 2 et 2,5 MHz. La largeur d'impulsion, mesurée à -20dB est comprise entre 0,5 µs et 1,5 µs, et avantageusement inférieure à 1 µs (et optimale à 0,7 µs). Le spectre du faisceau émis doit comporter une part suffisante d'ondes à basse fréquence de l'ordre de 1MHz dont la différence d'amplitude par rapport à la fréquence centrale ne doit pas être supérieure à 30 dB.

Avantageusement,le faisceau ultrasonore est focalisé et donne, dans l'eau, une tache de largeur d comprise entre 1,6 mm et 3,2 mm, et avantageusement voisine de 2 mm, et de longueur 1 comprise entre 15 et 50 mm, avantageusement 40 mm. Le coefficient de focalisation acoustique est inférieur à 0,65 et avantageusement inférieur à 0,6.

L'invention met de plus avantageusement en oeuvre l'une ou plusieurs des caractéristiques secondaires suivantes.

Le traducteur ultrasonore, de type piézo-électrique, est de préférence de type piézocomposite. Dans ce cas, il est avantageux que la focalisation soit obtenue par mise en forme du piézocomposite lui-même.

La position du point de focalisation dans la gaine est située vers ou au-delà des trois-quarts de l'épaisseur de la gaine, voire en dehors de la gaine.

La dimension principale du traducteur, à savoir son diamètre quand il est réalisé sous forme de mono-élément ou la largeur de la barrette de traducteurs de plusieurs éléments, est comprise entre 12 mm et 26 mm, et de préférence voisine de 19 mm.

La machine mettant en oeuvre le procédé de l'invention est de préférence une machine à mécanique oscillante, associée avantageusement à des traducteurs en barrettes.

Le faisceau ultrasonore et sa focalisation peuvent être obtenus par des moyens classiques, notamment par des traducteurs mono-éléments assortis de l'«optique» acoustique adéquate pour la focalisation.

Le traitement de signal de retour comporte avantageusement un asservissement de la porte électronique "santé matière" en fonction de la porte de sortie du traducteur. Il comporte également un système de compensation de l'atténuation en profondeur par amplification du signal de retard.

L'invention concerne aussi le dispositif de mise en oeuvre du procédé, à savoir un dispositif de contrôle de gaine comportant des moyens d'immersion de gaine et au moins un traducteur de contrôle émettant un faisceau d'ultrasons dont la fréquence centrale est comprise entre 1,5 MHz et 3 MHz et la largeur d'impulsion, mesurée à -20dB, est comprise entre 0,5 µs et 1,5 µs.

Avantageusement, le dispositif comprend un bac de passage de gaine comportant une entrée et une sortie étanche, et une machine à tête tournante, de préférence oscillante, portant plusieurs traducteurs disposés autour du passage de la gaine dans le bac.

L'invention sera mieux comprise à l'aide de la description qui suit, en référence aux dessins schématiques annexés sur lesquels :
La figure 1 est une vue schématique en coupe longitudinale d'une gaine tubulaire inspectée et d'un traducteur de contrôle ultrasonore,
La figure 2 est un exemple d'échogramme obtenu lors de l'inspection de la gaine,
La figure 3 représente le spectre d'émission du faisceau ultrasonore utilisé,
La figure 4 représente en coupe schématique un traducteur à mono-élément,
La figure 5 représente en perspective schématique un traducteur en barrette d'éléments,
La figure 6 représente schématiquement en vue de côté la même barrette d'éléments,
La figure 7 représente schématiquement une tête rotative supportant plusieurs traducteurs,
La figure 8 représente schématiquement les traces de détection sur la gaine contrôlée par la tête de la figure 7,
La figure 9 représente schématiquement un dispositif de contrôle intégrant la tête de la figure 7,
La figure 10 représente schématiquement une tête oscillante supportant plusieurs traducteurs,
La figure 11 représente schématiquement les traces de détection sur la gaine contrôlée par la tête oscillante de la figure 10.

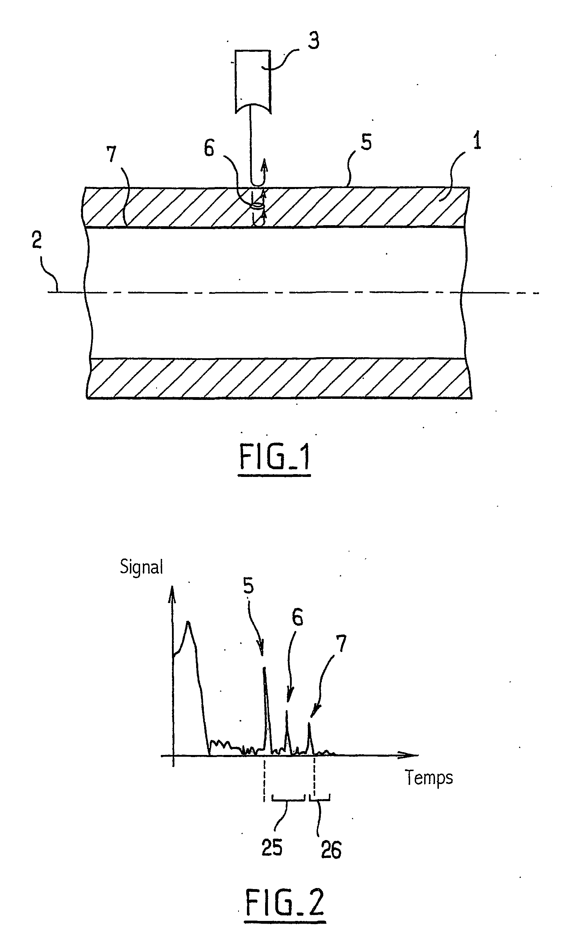

La gaine tubulaire inspectée 1, d'axe longitudinal 2, est plongée dans un milieu conducteur des ultrasons approprié non représenté, tel que l'eau, et un traducteur 3 envoie radialement à la conduite un faisceau ultrasonore 4 qui est plus ou moins réfléchi par des obstacles tels que l'interface eau/gaine 5, un défaut 6 ou le fond de gaine 7. Les signaux réfléchis apparaissent sur l'échogramme illustré en figure 2 donnant le signal de retour reçu en fonction du temps et permettent la détermination des obstacles 5, 6, 7. La localisation de la peau 5 et du fond 7 de la gaine permet aussi d'en contrôler l'épaisseur.

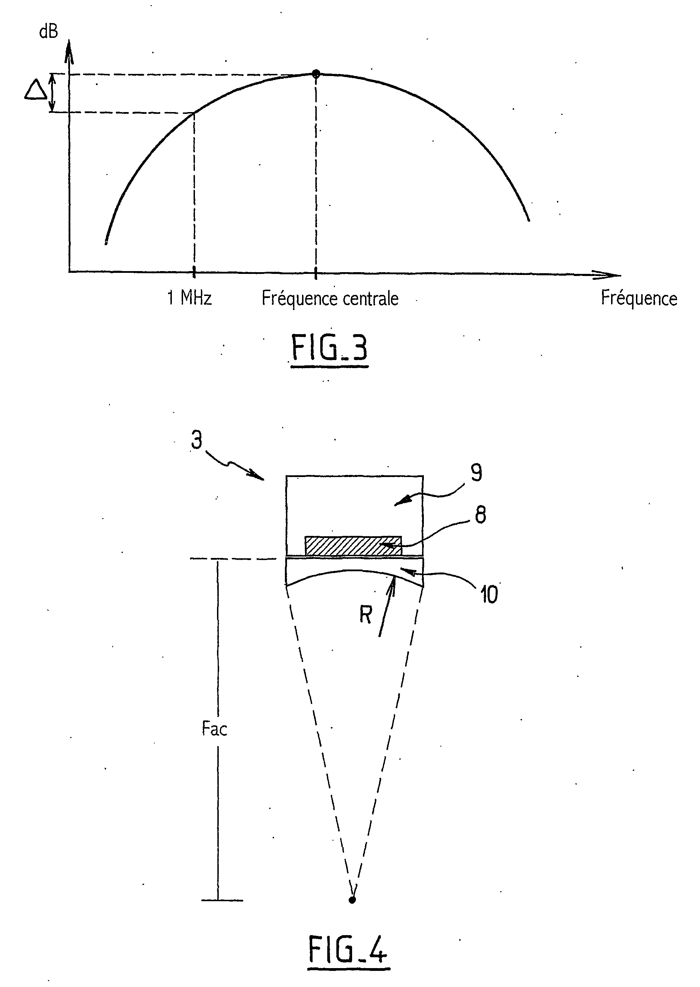

La figure 3 montre le spectre du faisceau ultrasonore avec une fréquence centrale (telle que définie par la norme NFA 09-323) comprise entre 1,5 et 3 MHz et de préférence entre 2 et 2,5 MHz. Des fréquences trop basses favorisent une atténuation faible mais au détriment de la sensibilité et si la fréquence est trop haute, l'atténuation fait qu'on ne peut plus contrôler la gaine dans son intégralité lorsque son épaisseur est importante.

La largeur d'impulsion à -20 dB (selon la même norme NFA 09-323) est inférieure ou égale à 1 µs : une impulsion brève permet une bonne détection près de la surface extérieure et une bonne résolution en profondeur. La largeur d'impulsion est de préférence supérieure à 0,5 µs pour être suffisamment énergique.

Le spectre du faisceau émis doit comporter une part suffisante d'ondes à basse fréquence de l'ordre de 1MHz dont la différence d'amplitude Δ par rapport à la fréquence centrale ne doit pas être supérieure à 30 dB. Ces ondes à basse fréquence permettent la détection des défauts enfouis profondément en raison de leur moindre sensibilité à l'atténuation dans le matériau de la gaine. Le spectre et la largeur d'impulsion sont directement liés et dépendent de l'amortissement du traducteur.

Dans le présent dispositif, la fréquence centrale et la bande passante du spectre ultrasonore dépendent essentiellement des caractéristiques du traducteur illustré figure 4, et principalement de sa fréquence de résonance, liée à l'épaisseur de l'élément piézo-électrique 8 et de son taux d'amortissement lié à la nature de l'amortisseur 9. En effet, le générateur d'impulsions électriques utilisé pour exciter le traducteur utilise des formes d'ondes unipolaires du type impulsion brève ou signal carré à fronts de montée et de descente rapides, telles que la bande passante du signal électrique d'excitation en résultant soit très supérieure à la bande passante de la fonction de transfert du traducteur. En pratique, par exemple, la bande passante à -6dB de l'excitation électrique couvre la gamme 500 kHz à 8 MHz, alors que la bande passante à -6dB de la fonction de transfert du traducteur couvre la gamme 1,5MHz à 4 MHz. La conséquence est que le traducteur travaille aux alentours de sa fréquence propre de résonance.

Ce type d'excitation présente plusieurs avantages :
- Meilleur rendement du traducteur, puisque l'élément piézo-électrique vibre à des fréquences proches de la fréquence de résonance.
- Simplicité du générateur. Ce type de générateur est très utilisé dans le domaine du contrôle.

La focalisation permettant d'obtenir un faisceau acoustique est mesurée à -6 DB, dans l'eau (selon la norme NFA 09-323) et elle présente avantageusement les caractéristiques suivantes.

La largeur d de la tache est comprise entre 1,6 et 3,2 mm et est idéalement choisie entre 2 mm et 2,5 mm, ce qui permet d'assurer que les défauts dont le diamètre moyen est justement de l'ordre de 2 mm seront détectés ; la longueur de la tache est comprise entre 18 mm et 50 mm, idéalement à 40 mm, ce qui permet de couvrir toute l'épaisseur de la gaine, puisqu'une longueur de tache de 18 mm dans l'eau correspond à environ 15 mm dans un matériau polymère typique des applications envisagées. En fait, il est préférable de choisir une longueur de tache bien supérieure à l'épaisseur de gaine, et de focaliser la tache vers le dernier quart, ou au-delà, de l'épaisseur de la gaine, voire au-delà du fond de la gaine, de manière à couvrir largement toute la gaine et à être moins sensible aux variations de la distance entre le traducteur et la gaine. Le coefficient de focalisation acoustique est inférieur à 0,65 et même de préférence à 0,60 ; ceci correspond à un traducteur bien focalisé, permettant l'homogénéité et la reproductibilité du faisceau, la planéité des fronts d'onde et l'application au contrôle de matériaux atténuants.

La focalisation peut être obtenue par des lentilles ultrasonores, par des miroirs de formes convenables, par la mise en forme du transducteur piézo-électrique, notamment s'il s'agit d'un transducteur piézocomposite, ou par une mosaïque de transducteurs élémentaires déphasés électroniquement ("phased array").

La figure 4 illustre un mode de réalisation du traducteur 3 sous forme d'un mono-élément cylindrique 8 piézo-électrique, de diamètre D, accolé d'un côté à un amortisseur 9 et de l'autre côté à une lentille acoustique sphérique 10 de rayon R. La focale acoustique dans l'eau, F_{ac}, est donnée par la formule F_{ac} = g_{ac} (D²/4λ), où λ est la longueur d'onde, g_{ac} est le coefficient de focalisation acoustique lié au coefficient de focalisation optique gₒₚₜ avec g_{ac} = [(1+4 gₒₚₜ ²)^{1/2} - 1]/2gₒₚₜ et gₒₚₜ = 8 λR/D² (cf. norme A09-325).

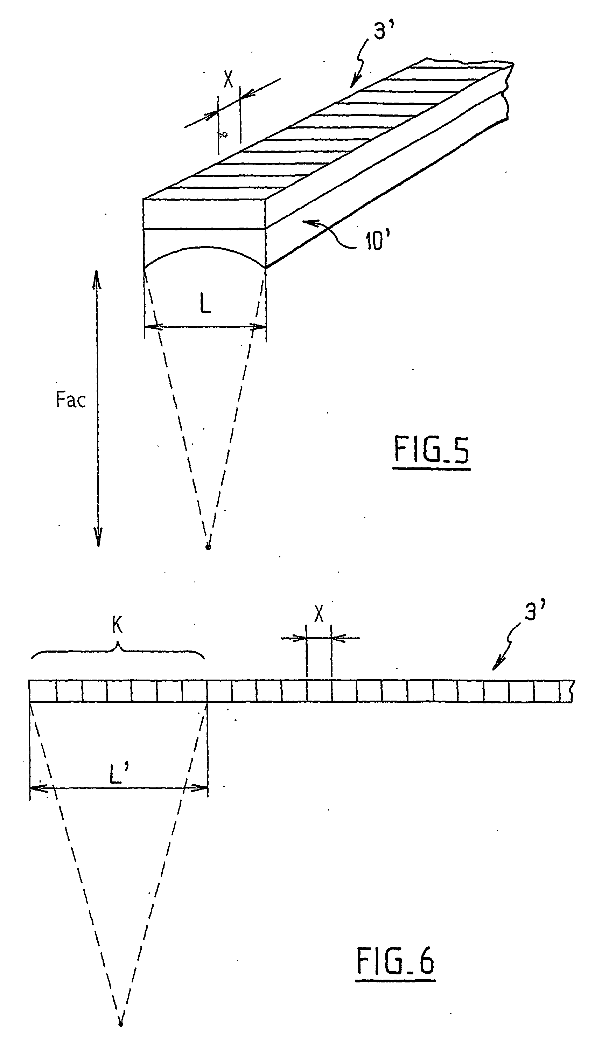

La figure 5 montre l'exemple de réalisation d'un traducteur 3' sous forme d'une barrette linéaire, composée par exemple de 128 éléments et accolée à une lentille cylindrique 10'. La largeur L de la barrette est avantageusement comprise entre 12 et 26 mm. La longueur unitaire X d'un élément de la barrette 3' est avantageusement inférieure ou égale à 2,5 mm (avec un optimum pour 1,5 mm).

Pour la focalisation en "phased array", l'on fait tirer k éléments (cf. figure 6), sur une largeur de L', parmi les n éléments de la barrette 3', avec L' = kX et on choisit k supérieur ou égal à 5, et de préférence supérieur ou égal à 8 et L' compris entre 12 et 26 mm.

Lorsqu'on utilise des traducteurs de type à barrette, plusieurs méthodes de traitement de signal peuvent être utilisées. On peut utiliser une technique de déphasage électronique dite en « phased array » qui consiste à faire tirer un groupe de plusieurs éléments de la barrette avec une courbe de retard pour le tir de chaque élément donné et de faire tirer successivement tous les groupes successifs de la barrette pour obtenir un signal pour chaque groupe. Une autre manière d'utiliser ce traducteur en barrette consiste à utiliser une technique dite d' «holographie acoustique numérique » qui consiste à faire tirer en simultané l'intégralité des éléments de la barrette et d'analyser par un traitement spécifique les données recueillies.

Afin de mécaniser le contrôle, on peut choisir plusieurs types de dispositifs.

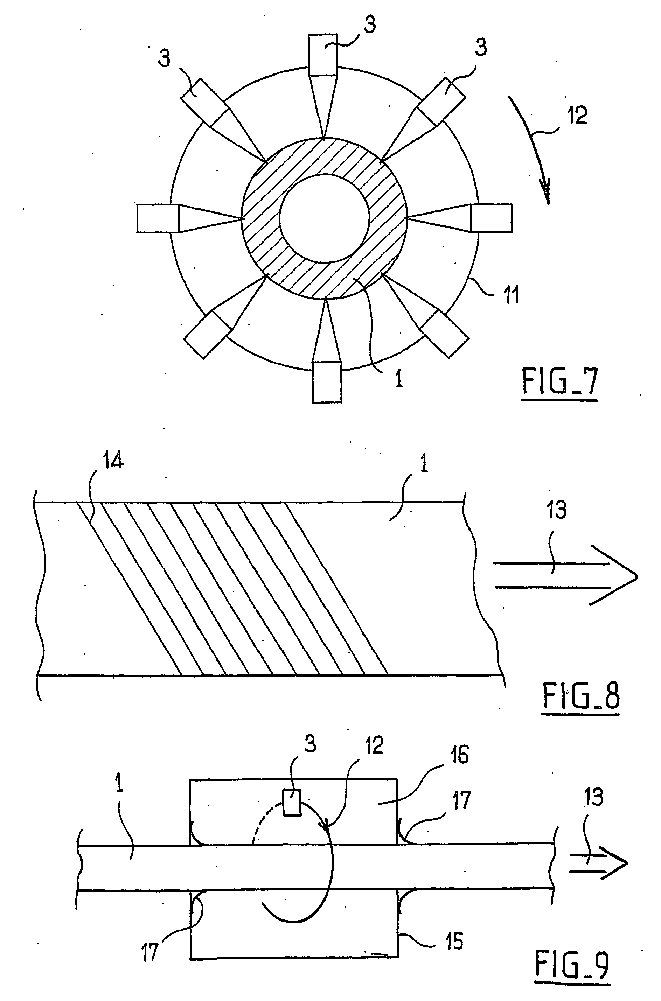

Selon le type représenté en figures 7 à 9, on dispose plusieurs traducteurs mono-éléments 3 sur une tête tournante 11, par exemple entre 8 et 20 traducteurs par tête. La tête est entraînée en rotation autour de la gaine, dans le sens de la flèche 12 par exemple, tandis que la gaine est elle-même entraînée en translation, dans le sens de la flèche 13 par exemple. Les trajectoires de détection sur la gaine sont donc des hélices 14, espacées d'un pas qu'on choisit suffisamment petit, par exemple de 2,5 mm, pour assurer la détection des petits défauts. Le couplage est réalisé par une immersion totale de la gaine et de la tête de traducteurs dans un bac 15 rempli d'eau 16, que traverse la gaine grâce à des ouvertures pourvues de joints d'étanchéité 17. Les signaux de la tête de traducteurs sont transmis au moyen d'un collecteur tournant. Compte tenu des phénomènes de bruits pouvant apparaître et de la relative fragilité de la tête tournante, sa vitesse de rotation est de l'ordre de 100 tr/min. Une tête de 20 traducteurs permet de contrôler une gaine défilant à la vitesse de 5 m/min.

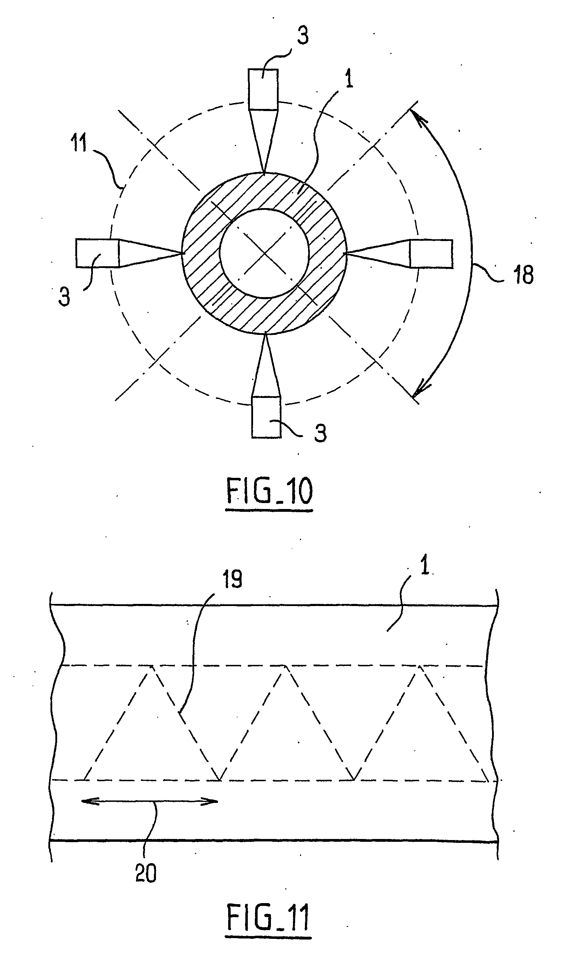

Selon une autre solution, en fait préférée, les traducteurs mono-éléments ou en barrettes sont embarqués sur une tête 11 oscillante, comme représenté schématiquement sur les figures 10 et 11, avec une amplitude d'oscillation angulaire qui est fonction du nombre de traducteurs 3, par exemple un quart de tour pour quatre traducteurs. La trace de détection des traducteurs sur la gaine est représentée en figure 11 et est sous forme de zigzags fait de segments hélicoïdaux 19, le pas 20 entre deux sommets correspondants des zigzags devant être égal à deux fois le diamètre du faisceau mono-élément ou à la largeur d'action de la barrette, pour permettre une détection complète.

L'intérêt des têtes tournantes ou oscillantes est de limiter le nombre des capteurs, mais un système fixe est tout à fait possible si un nombre suffisant de capteurs est prévu pour couvrir toute la surface de la gaine.

La transmission des signaux sur les dispositifs à tête tournante peut aussi se faire par voie hertzienne.

Afin d'améliorer les résultats de la détection, il est possible de traiter les signaux de diverses manières.

Ainsi, il est possible de corriger l'atténuation du matériau à l'aide d'un amplificateur à gain croissant avec le retard (DAC), ce qui permet de compenser l'atténuation lors de l'étalonnage.

On enregistre, pour chaque tir, la position et l'amplitude des échos d'entrée 5, de défaut 6 et de fond 7 (cf. figure 2) et on définit deux portes électroniques respectivement de santé matière 25 et d'épaisseur de gaine 26, asservies par rapport à l'écho d'entrée 5.

L'imagerie employée est de type C-scan, avec un maillage maximum de 2,5 mm dans le sens du défilement et de 1,5 mm angulairement.

Pour compenser les variations lentes d'épaisseur de gaine et/ou les variations lentes de la température qui ont une influence directe sur la vitesse ultrasonore, on peut ajouter une fonction d'auto-étalonnage des mesures d'épaisseur, valable uniquement sur gaine, à partir d'une comparaison périodique entre mesures ultrasonores, et mesure de différence de diamètre carcasse/gaine réalisées par d'autres moyens.

Ceci peut être utilisé pour asservir la largeur de la porte électronique de détection de défauts ou porte dite de "santé matière" 25, afin que celle-ci couvre la proportion la plus grande possible de l'épaisseur de la gaine, sans pour autant risquer de couvrir l'écho de fond, ce qui engendrerait de fausses indications.

## Revendications

1. Procédé de contrôle d'une gaine tubulaire (2) en matière plastique extrudée, **caractérisé en ce qu'**il s'agit d'un procédé échographique ultrasonore par immersion, **en ce que** la fréquence centrale des ultrasons est choisie entre 1,5 MHz et 3 MHz, avantageusement entre 2 et 2,5 MHz, **en ce que** la largeur d'impulsion, mesurée à -20dB, est comprise entre 0,5 µs et 1,5 µs, avantageusement inférieure à 1 µs, et **en ce qu'**on utilise un spectre comportant une part suffisante d'ondes à basse fréquence de l'ordre de 1MHz dont la différence d'amplitude par rapport à la fréquence centrale ne doit pas être supérieure à 30 dB.

2. Procédé selon la revendication 1, **caractérisé en ce que** la forme du faisceau ultrasonore est focalisée et donne une tache de largeur d comprise entre 1,6 mm et 3,2 mm et de longueur 1 dans l'eau comprise entre 15 et 50 mm, avantageusement 40 mm.

3. Procédé selon l'une quelconque des revendications 1 ou 2, **caractérisé en ce que** le coefficient de focalisation acoustique est inférieur à 0,65 et avantageusement inférieur à 0,60.

4. Procédé selon l'une quelconque des revendications 1 à 3, **caractérisé en ce qu'**on utilise un traducteur ultrasonore (3, 3') de type piézocomposite.

5. Procédé selon l'une quelconque des revendications 1 à 4, **caractérisé en ce qu'**on règle la position du point de focalisation dans la gaine de manière qu'il soit situé au moins vers ou au-delà des trois-quarts de l'épaisseur de la gaine, voire au-delà de la gaine.

6. Procédé selon l'une quelconque des revendications 1 à 5, **caractérisé en ce qu'**on utilise un traducteur (3, 3') de dimension principale comprise entre 12 mm et 26 mm, et de préférence voisine de 19 mm.

7. Procédé selon l'une quelconque des revendications 1 à 6, **caractérisé en ce que** la focalisation est de préférence obtenue par mise en forme du composant piézocomposite lui-même.

8. Procédé selon l'une quelconque des revendications 1 à 7, **caractérisé en ce qu'**il est mis en oeuvre dans une machine à mécanique tournante.

9. Procédé selon l'une quelconque des revendications 1 à 7, **caractérisé en ce qu'**il est mis en oeuvre dans une machine à mécanique oscillante.

10. Procédé selon l'une quelconque des revendications 1 à 9, **caractérisé en ce qu'**on utilise des traducteurs sous forme de barrettes (3').

11. Procédé selon la revendication 10, **caractérisé en ce que** le signal ultrasonore est géré par une technique de déphasage électronique ou une technique d'holographie acoustique numérique.

12. Dispositif de contrôle d'une gaine tubulaire (2) en matière plastique extrudée, **caractérisé en ce qu'**il comporte des moyens (15) d'immersion de gaine et au moins un traducteur ultrasonore (3, 3') de contrôle émettant un faisceau d'ultrasons dont la fréquence centrale est comprise entre 1,5 MHz et 3 MHz et la largeur d'impulsion, mesurée à -20dB, est comprise entre 0,5 µs et 1,5 µs, avantageusement inférieure à 1 µs, le spectre comportant une part suffisante d'ondes à basse fréquence de l'ordre de 1MHz dont la différence d'amplitude par rapport à la fréquence centrale ne doit pas être supérieure à 30 dB.

13. Dispositif selon la revendication 12, **caractérisé en ce qu'**il comprend un bac (15) de passage de gaine comportant une entrée et une sortie étanche, et une machine à tête tournante portant plusieurs traducteurs (3) disposés autour du passage de gaine dans le bac.

## Patentansprüche

1. Verfahren zur Überprüfung einer rohrförmigen Ummantelung bzw. eines Hüllrohrs (2) aus extrudiertem Kunststoffmaterial, **dadurch gekennzeichnet, daß** es sich um ein Ultraschallverfahren bzw. Ultraschall-Widerhallverfahren durch Tauchen bzw. Eintauchen handelt, daß die zentrale Frequenz des Ultraschalls zwischen 1,5 MHz und 3 MHz, vorzugsweise zwischen 2 und 2,5 MHz gewählt wird, und daß die bei -20 dB gemessene Impulsbreite zwischen 0,5 µs und 1,5 µs, vorzugsweise unter 1 µs liegt, daß ein Spektrum verwendet wird, umfassend ein ausreichendes Wellenteil niedriger Frequenz in der Größenordnung von 1 MHz, dessen Amplitudendifferenz in bezug auf die Zentralfrequenz nicht größer als 30 dB sein darf.

2. Verfahren nach Anspruch 1, **dadurch gekennzeichnet, daß** die Formen des Ultraschallstrahls bzw. -bündels fokussiert wird und einen Punkt bzw. eine Stelle mit einer Breite d zwischen 1,6 mm und 3,2 mm und einer Länge I im Wasser zwischen 15 und 50 mm, vorzugsweise 40 mm ergibt.

3. Verfahren nach einem der Ansprüche 1 oder 2, **dadurch gekennzeichnet, daß** der akustische Fokussierungs-Koeffizient unter 0,65 und vorzugsweise unter 0,60 liegt.

4. Verfahren nach einem der Ansprüche 1 bis 3, **dadurch gekennzeichnet, daß** ein Ultraschallwandler (3, 3') der Piezo-Verbund-Art verwendet wird.

5. Verfahren nach einem der Ansprüche 1 bis 4, **dadurch gekennzeichnet, daß** die Position des Brenn- bzw. Fokussierpunkts in dem Rohr bzw. der Ummantelung derart gesteuert bzw. geregelt wird, sodaß er wenigstens bei oder über mehr als drei Viertel der Dicke des Rohrs, sogar über dem Rohr, liegt.

6. Verfahren nach einem der Ansprüche 1 bis 5, **dadurch gekennzeichnet, daß** ein Wandler (3, 3') mit einer Hauptabmessung zwischen 12 mm und 26 mm, und vorzugsweise nahe bei 19 mm verwendet wird.

7. Verfahren nach einem der Ansprüche 1 bis 6, **dadurch gekennzeichnet, daß** die Fokussierung vorzugsweise durch ein Formen der Piezo-Verbund-Komponente selbst erreicht wird.

8. Verfahren nach einem der Ansprüche 1 bis 7, **dadurch gekennzeichnet, daß** es in einer Maschine mit Dreh- bzw. Schwenkmechanik eingesetzt wird.

9. Verfahren nach einem der Ansprüche 1 bis 7, **dadurch gekennzeichnet, daß** es in einer Maschine mit Pendel- bzw. Oszillationsmechanik eingesetzt wird.

10. Verfahren nach einem der Ansprüche 1 bis 9, **dadurch gekennzeichnet, daß** Wandler in der Form von Stäben bzw. Stangen bzw. Polbrücken bzw. -stegen (3') verwendet werden.

11. Verfahren nach Anspruch 10, **dadurch gekennzeichnet, daß** das Ultraschallsignal durch eine Technik einer elektronischen Phasenverschiebung oder eine numerische bzw. digitale akustische Holographietechnik erzeugt bzw. beherrscht wird.

12. Steuer- bzw. Regel- bzw. Überprüfungsvorrichtung für eine rohrförmige Ummantelung bzw. ein Hüllrohr (2) aus extrudiertem Kunststoffmaterial, **dadurch gekennzeichnet, daß** sie Tauchmittel (15) für das Rohr und wenigstens einen Überprüfungs-Ultraschall-Wandler (3, 3') umfaßt, der einen Ultraschallstrahl bzw. ein Ultraschallbündel emittiert, dessen zentrale Frequenz zwischen 1,5 MHz und 3 MHz liegt und dessen Pulsbreite, gemessen bei -20 dB zwischen 0,5 µs und 1,5 µs, vorzugsweise unter 1 µs ist, wobei das Spektrum ein ausreichendes Wellenteil niedriger Frequenz in der Größenordnung von 1 MHz umfaßt, dessen Amplitudendifferenz in bezug auf die zentrale Frequenz nicht größer als 30 dB sein darf.

13. Vorrichtung nach Anspruch 12, **dadurch gekennzeichnet, daß** sie einen Durchgangsbehälter (15) für das Rohr, umfassend einen Eintritt und einen dichten Austritt, und eine Maschine mit Drehkopf umfaßt, der bzw. die mehrere Wandler (3) trägt, die um den Durchtritt des Rohrs in dem Behälter angeordnet sind.

## Claims

1. Method of checking a tubular sheath (2) made of extruded plastic, **characterized in that** it involves an immersion ultrasound echographic method, **in that** the central frequency of the ultrasounds is chosen between 1.5 MHz and 3 MHz, advantageously between 2 and 2.5 MHz, **in that** the pulse width, measured at -20 dB is between 0.5 µs and 1.5 µs, advantageously less than 1 µs, and **in that** a spectrum is used which comprises a sufficient share of waves at low frequency of the order of 1 MHz whose amplitude difference with respect to the central frequency must not be greater than 30 dB.

2. Method according to Claim 1, **characterized in that** the shape of the ultrasound beam is focussed and gives a spot of width d lying between 1.6 mm and 3.2 mm and of length 1 in water lying between 15 and 50 mm, advantageously 40 mm.

3. Method according to any one of Claims 1 or 2, **characterized in that** the acoustic focussing coefficient is less than 0.65 and advantageously less than 0.60.

4. Method according to any one of Claims 1 to 3, **characterized in that** an ultrasound transducer (3, 3') of piezocomposite type is used.

5. Method according to any one of Claims 1 to 4, **characterized in that** the position of the point of focussing in the sheath is adjusted in such a way that it is situated at least towards or beyond three quarters of the thickness of the sheath, or even beyond the sheath.

6. Method according to any one of Claims 1 to 5, **characterized in that** a transducer (3, 3') of main dimension lying between 12 mm and 26 mm, and preferably around 19 mm, is used.

7. Method according to any one of Claims 1 to 6, **characterized in that** the focussing is preferably obtained by shaping the piezocomposite component itself.

8. Method according to any one of Claims 1 to 7, **characterized in that** it is implemented in a revolving mechanics machine.

9. Method according to any one of Claims 1 to 7, **characterized in that** it is implemented in an oscillating mechanics machine.

10. Method according to any one of Claims 1 to 9, **characterized in that** transducers in the form of linear arrays (3') are used.

11. Method according to Claim 10, **characterized in that** the ultrasound signal is managed by a technique of electronic phase shifting or a technique of digital acoustic holography.

12. Device for checking a tubular sheath (2) made of extruded plastic, **characterized in that** it comprises sheath immersion means (15) and at least one ultrasound transducer (3, 3') for checking which emits an ultrasound beam whose central frequency is between 1.5 MHz and 3 MHz and whose pulse width, measured at -20 dB, is between 0.5 µs and 1.5 µs, advantageously less than 1 µs, the spectrum comprising a sufficient share of waves at low frequency of the order of 1 MHz whose amplitude difference with respect to the central frequency must not be greater than 30 dB.

13. Device according to Claim 12, **characterized in that** it comprises a sheath passage container (15) comprising a leaktight inlet and outlet, and a machine with revolving head carrying several transducers (3) disposed around the sheath passage through the container.
